# EUROPÄISCHE PATENTSCHRIFT

(11) **EP 2 054 676 B1**
(45) Veröffentlichungstag und Bekanntmachung des Hinweises auf die Patenterteilung: **10.07.2013**
(21) Anmeldenummer: 07802858.6
(22) Anmeldetag: 24.08.2007
(51) Int. Cl.: F24J 2/48

(54) **VERFAHREN ZUR HERSTELLUNG EINES ABSORBERBLECHS FÜR SONNENKOLLEKTOREN**
METHOD FOR THE PRODUCTION OF AN ABSORBER SHEET METAL PLATE FOR SOLAR COLLECTORS
PROCÉDÉ DE FABRICATION D'UNE TOLE ABSORBANTE POUR CAPTEURS SOLAIRES

(30) Priorität: 25.08.2006 DE 102006039804
(43) Veröffentlichungstag der Anmeldung: 06.05.2009
(73) Patentinhaber: Hydro Aluminium Deutschland GmbH, 41515 Grevenbroich (DE)
(72) Erfinder: OETTING, Wolf, San jose, CA 95117 (US); SCHENKEL, Willi, 41515 Grevenbroich (DE); DENKMANN, Volker, 47906 Kempen (DE); SIEMEN, Andreas, 41363 Jüchen (DE); BLECHER, Axel, 53859 Niederkassel (DE); HALLENSTVET, Merete, 3115 Tønsberg (NO); LACAU, Anica, 3080 Holmestrand (NO); SIMON, Christian Rohne, 0873 OSLO (NO); TILSET, Bente Gilbu, 1359 Hvalstad (NO)
(74) Vertreter: Cohausz & Florack
(86) Internationale Anmeldenummer: PCT/EP2007/058809
(87) Internationale Veröffentlichungsnummer: WO 2008/023054

(56) Entgegenhaltungen:
- DE-A1- 19 610 015
- DE-A1- 19 620 645
- DE-U1- 20 112 259
- DE-U1-202005 006 478
- DE-U1-202006 009 369
- FR-A- 2 805 283
- GB-A- 2 094 666
- US-A- 4 153 753
- US-A- 4 277 537
- US-A- 5 288 356
- US-A1- 2004 233 530

## Beschreibung

Die Erfindung betrifft ein Verfahren zur Herstellung eines Absorberblechs für Sonnenkollektoren aus einem Band aus Metall, insbesondere aus Aluminium oder einer Aluminiumlegierung. Darüber hinaus betrifft die Erfindung ein Absorberblech für Sonnenkollektoren sowie eine vorteilhafte Verwendung des Absorberblechs.

Sonnenkollektoren sind Vorrichtungen zur Wärmegewinnung aus Sonnenstrahlung. Ein Sonnenkollektor sammelt und absorbiert die im Sonnenlicht enthaltene Energie, wobei im Gegensatz zu fotovoltaischen Anlagen nahezu das gesamte Strahlungsspektrum des Sonnenlichts mit hohem Wirkungsgrad ausgenutzt wird. Wichtigster Bestandteil des Kollektors ist der Absorber, der die Lichtenergie der Sonne in Wärme umwandelt und diese an ein ihn durchfließenden Wärmeträger weiterleitet. Der Absorber wird üblicherweise über ein Absorberblech realisiert, welches die direkte und die diffuse Sonnenstrahlung möglichst gut auffangen und in Wärme umwandeln soll. Das häufig aus einer Kupferlegierung oder einer Aluminiumlegierung bestehende Absorberblech muss darüber hinaus gewährleisten, dass die aufgenommene Wärme nicht wieder in Form von Strahlung abgegeben wird. Um die Energieverluste durch Emission von Wärmestrahlung durch das Absorberblech zu minimieren, weist dieses eine sogenannte hochselektive Beschichtung auf. Typischerweise betragen die Absorptionswerte der hochselektiven Beschichtung für das Sonnenlicht etwa 94 % und die Emissionswerte weniger als 6 %. Die hochselektiven Beschichtungen bestehen aus extrem dünnen Schichten, welche üblicherweise durch ein "Physical Vapor Deposition" (PVD)-Verfahren oder ein "Chemical Vapor Deposition" (CVD)-Verfahren hergestellt werden. Bei dem PVD-Verfahren wird ein Band über Schleusensysteme in eine VakuumBeschichtungsanlage eingeführt und passiert dcrt mehrere hintereinander geschaltete Kathoden, auf die das Beschichtungsmaterial als Target montiert ist. Durch beschleunigte Argon-Ionen werden Partikel aus dem Target aus Beschichtungsmaterial herausgeschlagen und schlagen sich auf der Oberfläche des metallischen Bandes nieder, wobei sie eine feste Verbindung mit diesem metallischen Band eingehen. Anschließend wird das Band aus dem Vakuum ausgeschleust und aufgewickelt. Zwar lassen sich mit dem bekannten Verfahren geringe Schichtdicken erzielen, der Investitionsaufwand für PVD-Anlagen oder CVD-Anlagen ist jedoch sehr hoch. Dies schlägt sich auf die Kosten für das Absorberblech nieder.

So beschreibt die Druckschrift GB 2 094 666 A ein Verfähren zur Aufbringung einer solar-selektiven Beschichtung auf ein metallisches Substrat mittels Elektroplattleren, bei welchem das Substrat durch mehrere Tauchbäder geführt wird.

Die Druckschrift DE 20 2005 006478 U1 beschreibt ein Absorberblech aus Aluminium mit mindestens drei funktionalen Schichten umfassend eine Haftschicht, eine Absorberschicht und eine äußere Funktionsschicht, die unter Verwendung eines Coil-Coating-Verfahrens aufgebracht werden können.

Hiervon ausgehend liegt der vorliegenden Erfindung die Aufgabe zugrunde, ein Verfahren zur Herstellung eines Absorberblechs für Sonnenkollektoren zur Verfügung zu stellen, mit welchen ein Absorberblech mit hochselektiven Beschichtung kostengünstig herstellbar ist. Darüber hinaus liegt der vorliegenden Erfindung die Aufgabe zugrunde, ein kostengünstig herstellbares Absorberblech vorzuschlagen.

Gemäß einer ersten Lehre der vorliegenden Erfindung wird die oben aufgezeigte Aufgabe verfahrensmäßig dadurch gelöst, dass das Band unter Verwendung eines Coil-Coating-Verfahrens mit einer hochselektiven Beschichtung lackiert wird, welche sehr gute Absorptionseigenschaften für Sonnenlicht aufweist und eine sehr geringe Wärmeabstrahlung gewährleistet.

Es hat sich gezeigt, dass unter Verwendung des Coil-Coating-Verfahrens auch sehr dünne Beschichtungen auf einem Band homogen aufgetragen werden können, so dass eine entsprechend dünne Schichten aufweisende hochselektive Beschichtung auf ein Band zur Herstellung von Absorberblechen aufgebracht werden kann. Für das erfindungsgemäße Verfahren sind im Gegensatz zu den bisher angewendeten Verfahren keine hohen Investitionskosten notwendig, da insbesondere ein Einschleusen und Ausschleusen in und aus einem Vakuum zur Beschichtung des Bandes nicht notwendig ist. Das Band kann dann beispielsweise zunächst auf ein Coil aufgewickelt und später auf Maß abgelängt werden. Denkbar ist aber auch ein unmittelbares Ablängen des Bandes nach erfolgtem Coil-Coating.

Die Beschichtung wird unter Verwendung von mindestens einer Lackierwalze aufgetragen. Über die Lackierwalzen kann die Schichtdicke durch deren Gravur und beispielsweise über deren Relativgeschwindigkeit zum Band sehr genau eingestellt werden.

Erfindungsgemäβ wird eine Mehrzahl an funktionalen Schichten beim Coil-Coating-Verfahren aufgebracht, so dass die Eigenschaften der hochselektiven Beschichtung durch die Auswahl der unterschiedlichen funktionalen Schichten eingestellt werden können.

Dabei betragen die Schichtdicken der einzelnen funktionalen Schichten 0,0005 bis 0,02 mm.

Zur Herstellung eines Absorberblechs wird eine Haftvermittlerschicht oder eine Primerschicht auf die Bandoberfläche aufgebracht, welche vorzugsweise in einer Vorbehandlung aufgetragen wird. Über die Haftvermittlerschicht bzw. die Primerschicht werden die Hafteigenschaften der Bandoberfläche für nachfolgende funktionale Schichten deutlich verbessert. Die Haftvermittlerschicht aber auch die Primerschicht wird vorzugsweise in einer Vorbehandlung aufgetragen, so dass das Auftragen der hochselektiven Beschichtung nicht durch das Aufbringen der Haftvermittler- oder Primerschicht gestört wird. Darüber hinaus können dann die verbesserten Hafteigenschaften der Bandoberfläche beim Auftragen der anderen Schichten ausgenutzt werden. Auch die Haftvermittlerschicht kann hierbei bereits als funktionale Beschichtung (hochselektiv) ausgelegt werden.

Enthalten die aufgetragenen Schichten funktionale Partikel, insbesondere Nanopartikel, Metallpartikel, Metalloxidpartikel und/oder Pigmente, können durch die einzelnen aufgetragenen Schichten unterschiedliche Funktionen realisiert werden. Beispielsweise können dadurch Antireflexeigenschaften oder Absorptionseigenschaften einer Schicht über die Wahl der funktionalen Partikel bestimmt werden.

Besonders geringe Schichtdicken werden dadurch erzielt, dass eine oder mehrere Schichten auf Sol-Gel-Basis aufgebracht werden. Bei Verwendung einer Beschichtung auf Sol-Gel-Basis erfolgt zunächst das Auftragen eines flüssigen Sol-Films, welcher sich nach kurzer Trocknung in einen festen Gel-Film transformiert. Durch eine weitere Wärmebehandlung werden dann die organischen Bestandteile des metallorganischen Polymers entfernt, so dass beispielsweise ein Metalloxid-Film auf der Oberfläche zurückbleibt. Dies kann zur Herstellung der Absorptionsschicht durch Abscheiden von Titandioxid-Partikeln auf der Bandoberfläche und beim Auftragen der Antireflexschicht durch Abscheiden eines Siliziumdioxid-Films auf dem Band genutzt werden. Die erzielten Schichtdicken können dabei sehr gering sein. Die Funktionalität von Partikeln kann dabei erst durch den Trocknungsprozess hergestellt werden.

Schließlich ergeben sich weitere Vorteile daraus, dass die aufgebrachte Beschichtung zumindest teilweise elastische Eigenschaften aufweist. In diesem Fall ist es möglich, auch nach der Beschichtung das Absorberblech mit Prägungen zu versehen, um die Absorptionsoberfläche zu vergrößern, ohne dass Risse in der Beschichtung entstehen.

Gemäß einer zweiten Lehre der vorliegenden Erfindung wird die oben aufgezeigte Aufgabe durch ein Absorberblech dadurch gelöst, dass das Absorberblech mittels des erfindungsgemäßen Verfahrens hergestellt wird.

Wie bereits oben ausgeführt, kann die unter Verwendung des Coil-Coating-Verfahrens aufgebrachte Beschichtung wesentlich kostengünstiger erzeugt werden als bei den bisher notwendigen PVD- oder CVD-Verfahren, da die Investitionskosten für die kostenintensive Vakuumtechnologie entfallen und deutlich höhere Beschichtungsgeschwindigkeiten erreicht werden können.

Ein weiterer Kosten- aber auch Gewichtsvorteil kann bei dem erfindungsgemäßen Absorberblech gemäß einer nächsten weiteren Ausgestaltung dadurch erzielt werden, dass das Absorberblech aus Aluminium oder einer Aluminiumlegierung besteht. Aluminium weist gegenüber Kupfer ein deutlich geringeres Gewicht bei ähnlichen Wärmeleiteigenschaften auf. Darüber hinaus ist Aluminium als Werkstoff deutlich kostengünstiger als Kupfer.

Ein im Hinblick auf die Absorptionseigenschaften optimiertes Absorberblech wird darüber hinaus dadurch zur Verfügung gestellt, dass die hochselektive Beschichtung aus einer Mehrzahl funktionaler Schichten besteht, wobei die funktionalen Schichten zumindest teilweise funktionale Partikel, insbesondere Nanopartikel, Metallpartikel, Metalloxidpartikel und/oder Pigmente aufweisen. Hierdurch ist es möglich durch die Auswahl der funktionalen Partikel die einzelnen Schichten im Hinblick auf ihre Funktion zu optimieren. Beispielsweise kann eine funktionale Schicht die Eigenschaft aufweisen, dass diese kurzwellige Sonnenstrahlung absorbiert und gleichzeitig transparent für langwellige Wärmestrahlung ist. Hierdurch wird eine Weiterleitung der in langwellige Wärmestrahlung umgewandelten kurzwelligen Sonnenstrahlung erzielt, so dass das Absorberblech entsprechend erwärmt wird. Gleichzeitig können die äußeren Schichten reflektiv für Wärmestrahlung sein, so dass die Absorptionsschicht nach Außen kaum Wärmestrahlung emittiert. Darüber hinaus sind weitere Aufgaben ein Oberflächenschutz gegen Korrosion, beispielsweise durch Feuchtigkeit- und Temperaturbeständigkeit, oder Haftvermittlungseigenschaften, welche die Beschichtung des metallischen Substrats deutlich verbessern.

Die Schichtdicken der genannten funktionalen Schichten des Absorberblechs betragen vorzugsweise 0,0005 bis 0,02 mm.

Wie bereits zuvor ausgeführt, wird ein Absorberblech mit verbesserten Hafteigenschaften für funktionale Schichten dadurch zur Verfügung gestellt, dass eine Haftvermittler- oder Primerschicht vorgesehen ist.

Besonders dünne Schichtdicken werden dadurch zur Verfügung gestellt, dass mindestens eine funktionale Schicht auf Sol-Gel-Basis vorgesehen ist.

Die Wärmeabsorptionseigenschaften des erfindungsgemäßen Absorberblechs können darüber hinaus ferner dadurch weiter verbessert werden, dass das Absorberblech vor oder nach dem Beschichten eingebrachte Prägungen aufweist. Durch die Prägungen wird die zur Absorption zur Verfügung stehende Oberfläche des Blechs vergrößert.

Schließlich wird die oben aufgezeigte Aufgabe durch die Verwendung des erfindungsgemäßen Absorberbleches für Sonnenkollektoren, insbesondere für Flachkollektoren gelöst. Das kostengünstig hergestellte Absorberblech kann, wie bereits ausgeführt, dazu beitragen, dass die Kosten der Sonnenkollektoren bzw. Flachkollektoren bei gleich bleibendem Wirkungsgrad deutlich verringert werden.

Es gibt nun eine Vielzahl von Möglichkeiten das erfindungsgemäße Verfahren zur Herstellung eines Absorberblechs für Sonnenkollektoren sowie das erfindungsgemäße Absorberblech und dessen Verwendung auszugestalten und weiterzubilden. Hierzu wird verwiesen einerseits auf die den Patentansprüchen 1 und 6 nachgeordneten Patentansprüche, andererseits auf die Beschreibung eines Ausführungsbeispiels in Verbindung mit der Zeichnung.

Die einzige Zeichnung zeigt eine schematische Schnittansicht der Oberfläche eines Ausführungsbeispiels eines erfindungsgemäßen Absorberblechs.

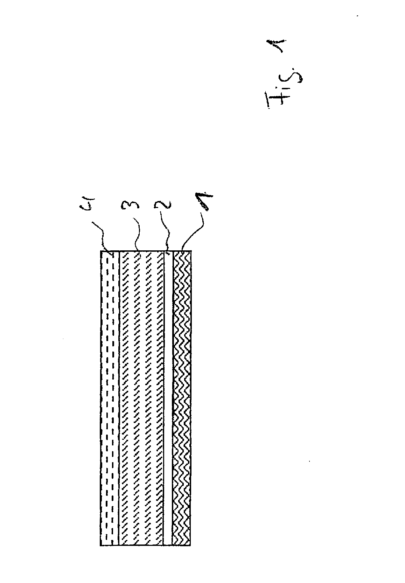

Fig. 1 zeigt die Oberfläche des Absorberblechs 1, welche eine Beschichtung aus insgesamt drei funktionalen Schichten 2, 3, 4 aufweist. Die funktionale Schicht 2 ist als Haftvermittlungsschicht oder Primerschicht ausgebildet und vorzugsweise in einer Vorbehandlung bereits auf die Bandoberfläche aufgebracht. Die funktionale Schicht 3 besteht aus einer auf Sol-Gel-Basis bestehenden Absorptionsschicht, welche Nanopartikel, beispielsweise Titannitrit oder Titandioxidpartikel aufweist. Die Absorptionsschicht 3 ist vorzugsweise für langwellige Wärmestrahlung transparent und ermöglicht somit durch Umwandlung der kurzwelligen Sonnenstrahlung in langwellige Sonnenstrahlung die Weiterleitung der Wärmeenergie an die Oberfläche des Absorberblechs 1. Die ebenfalls über ein Coil-Coating-Verfahren aufgetragene und auf einer Sol-Gel-Basis basierende Antireflexschicht 4 ermöglicht, dass der Reflektionskoeffizent des beschichteten Absorberblechs sehr gering ist, da über die Antireflexschicht eine Brechungsindexanpassung erfolgt. Hierdurch wird ebenfalls die Erhöhung der Absorption des Sonnenlichts erzielt. Alle genannten funktionalen Schichten 2, 3, 4 sind erfindungsgemäß über ein Coil-Coating-Verfahren aufgebracht worden, bei welchem Lackierwalzen verwendet werden. Die Sol-Gel-Schichten können auf einfache Weise durch diese Auftragswalzen aufgetragen werden.

## Patentansprüche

1. Verfahren zur Herstellung eines Absorberblechs (1) für Sonnenkollektoren aus einem Band aus Metall, insbesondere aus Aluminium oder einer Aluminiumlegierung, bei dem das Band unter Verwendung eines Coil-Coating-Vefahrens mit einer hochselektiven Beschichtung lackiert wird, welche sehr gute Absorptionseigenschaften für Sonnenlicht aufweist und eine sehr geringe Wärmeabstrahlung gewährleistet,
wobei die hochselektive Beschichtung eine Mehrzahl an funktionalen Schichten (2, 3, 4) aufweist, wobei die Beschichtung eine Haftvermittlerschicht oder eine Primerschicht (2)und eine Absorptionsschicht (3) aufweist,
**dadurch gekennzeichnet, dass**
die hochselektive Beschichtung unter Verwendung mindestens einer Lackierwalze aufgetragen wird und die Mehrzahl an funktionalen Schichten unter Verwendung von Lackierwalzen aufgebracht wird, wobei die Absorptionsschicht (3) auf Sol-Gel-Basis besteht und Nanopartikel aufweist.

2. Verfahren nach Anspruch 1,
**dadurch gekennzeichnet, dass** die Haftvermittlerschicht oder die Primerschicht (2) in einer Vorbehandlung aufgetragen wird.

3. Verfahren nach Anspruch 1,
**dadurch gekennzeichnet, dass** die aufgetragenen Schichten (2, 3, 4) funktionale Partikel, insbesondere Nanopartikel, Metallpartikel, Metalloxidpartikel und/oder Pigmente enthalten.

4. Verfahren nach einem der Ansprüche 1 bis 3,
**dadurch gekennzeichnet, dass** mehrere Schichtern (2, 3, 4) auf Sol-Gel-Basis aufgebracht werden.

5. Verfahren nach einem der Ansprüche 1 bis 4,
**dadurch gekennzeichnet, dass** die aufgebrachte Beschichtung zumindest teilweise elastische Eigenschaften aufweist.

6. Absorberblech (1) eines Sonnenkollektors, hergestellt aus einem metallischen Band unter Verwendung eines Verfahrens nach Anspruch 1 bis 5.

7. Absorberblech (1) nach Anspruch 6,
**dadurch gekennzeichnet, dass** das Absorberblech (1) aus Aluminium oder einer Aluminiumlegierung besteht.

8. Absorberblech (1) nach Anspruch 6 oder 7,
**dadurch gekennzeichnet, dass** die funktionalen Schichten (2, 3, 4) zumindest teilweise funktionale Partikel, Metallpartikel, Metalloxidpartikel und/oder Pigmente aufweisen.

9. Absorberblech (1) nach einem der Ansprüche 6 bis 8,
**dadurch gekennzeichnet, dass** das Absorberblech (1) vor oder nach dem Beschichten eingebrachte Prägungen aufweist.

10. Verwendung eines Absorberbleches (1) nach Anspruch 6 bis 9 für Sonnenkollektoren, insbesondere für Flachkollektoren.

## Claims

1. Method for the production of an absorber plate (1) for solar collectors from a strip made of metal, in particular of aluminium or an aluminium alloy, wherein the strip, using a coil coating process, is painted with a highly selective coating, which has very good absorptive properties for sunlight and ensures very little heat emission, wherein the highly selective coating comprises several functional coats (2, 3, 4) wherein the coating comprises an adhesion promoter coat or a primer coat (2) and an absorbent coat (3), **characterized in that** the highly selective coating is applied using at least one roller coater and that a plurality of functional coats are applied by using roller coaters, wherein the absorbent coat (3) is based on a sol-gel basis and comprises nano-particles.

2. Method according to claim 1, **characterized in that** the adhesion promoter coat or the primer coat (2) is applied in a pretreatment.

3. Method according to claim 1, **characterized in that** the applied coats (2, 3, 4) contain functional particles, in particular nano-particles, metal particles, metallic oxide particles and/or pigments.

4. Method according to anyone of claims 1 to 3, **characterized in that** several coats (2, 3, 4) on a sol-gel basis are applied.

5. Method according to anyone of claims 1 to 4, **characterized in that** the applied coating has at least partial flexible characteristics.

6. Absorber plate (1) of a solar collector, made from a metallic strip, using a method according to claim 1 to 5.

7. Absorber plate (1) according to claim 6, **characterized in that** the absorber plate (1) is comprised of aluminium or an aluminium alloy.

8. Absorber plate (1) according to claim 6 or 7, **characterized in that** the functional coats (2, 3, 4) have at least partial functional particles, metal particles, metallic oxide particles and/or pigments.

9. Absorber plate according to anyone of claims 6 to 8, **characterized in that** the absorber plate (1) is provided with embossings before or after coating.

10. Use of an absorber plate according to claim 6 to 9 for solar collectors, in particular for flat plate collectors.

## Revendications

1. Procédé de fabrication d'une tôle d'absorbeur (1) pour des capteurs solaires, en une bande métallique, notamment en aluminium ou en un alliage d'aluminium, lors duquel, en utilisant un procédé de prélaquage, on laque la bande avec un revêtement hautement sélectif, qui fait preuve d'excellentes propriétés d'absorption de la lumière solaire et qui assure un très faible rayonnement thermique, le revêtement hautement sélectif comportant une pluralité de couches fonctionnelles (2, 3, 4), le revêtement comportant une couche d'agent adhésif ou une couche de fond (2) et une couche d'absorption (3), **caractérisé en ce qu'**on applique le revêtement hautement sélectif en utilisant au moins un rouleau à vernir et **en ce qu'**on applique la pluralité de couches fonctionnelles en utilisant des rouleaux à vernir, la couche d'absorption (3) étant constituée sur base sol-gel et comportant des nanoparticules.

2. Procédé selon la revendication 1, **caractérisé en ce qu'**on applique la couche d'agent adhésif ou la couche de fond (2) lors d'un prétraitement.

3. Procédé selon la revendication 1, **caractérisé en ce que** les couches (2, 3, 4) appliquées contiennent des particules fonctionnelles, notamment des nanoparticules, des particules métalliques, des particules d'oxydes métalliques et/ou des pigments.

4. Procédé selon l'une quelconque des revendications 1 à 3, **caractérisé en ce qu'**on applique plusieurs couches (2, 3, 4) sur base sol-gel.

5. Procédé selon l'une quelconque des revendications 1 à 4, **caractérisé en ce que** le revêtement appliqué fait preuve au moins en partie de propriétés élastiques.

6. Tôle d'absorbeur (1) d'un capteur solaire, fabriquée à partir d'une bande métallique en utilisant un procédé selon la revendication 1 à 5.

7. Tôle d'absorbeur (1) selon la revendication 6, **caractérisée en ce que** la tôle d'absorbeur (1) est constituée d'aluminium ou d'un alliage en aluminium.

8. Tôle d'absorbeur (1) selon la revendication 6 ou la revendication 7, **caractérisée en ce que** les couches fonctionnelles (2, 3, 4) comportent au moins en partie des particules fonctionnelles, des nanoparticules, des particules métalliques, des particules d'oxydes métalliques et/ou des pigments.

9. Tôle d'absorbeur (1) selon l'une quelconque des revendications 6 à 8, **caractérisée en ce que** la tôle d'absorbeur (1) présente des gaufrages ménagés avant ou après le revêtement.

10. Utilisation d'une tôle d'absorbeur (1) selon les revendications 6 à 9 pour des capteurs solaires, notamment des capteurs plats.
